# EUROPEAN PATENT APPLICATION

(11) **EP 4 823 083 A1**
(43) Date of publication of application: **14.10.2026**
(21) Application number: 26168407.0
(22) Date of filing: 27.03.2026
(51) Int. Cl.: H04N 1/387, H04N 1/00, H04N 1/04, H04N 1/203, H04N 1/393

(54) **IMAGE PROCESSING APPARATUS, IMAGE PROCESSING METHOD, AND IMAGE PROCESSING PROGRAM FOR GENERATING A 2 IN 1 COMPOSITE IMAGE AS FROM TWO SCANS OF AN ID CARD**

(30) Priority: 07.04.2025 JP 2025063035
(71) Applicant: KYOCERA Document Solutions Inc., Osaka-shi, Osaka 540-8585 (JP)
(72) Inventor: YABUUCHI, Yasuyuki, Osaka-shi, Osaka, 540-8585 (JP)
(74) Representative: Viering, Jentschura & Partner mbB Patent- und Rechtsanwälte

(57) **Abstract**

An image processing apparatus (1) includes at least one processor (100) and at least one memory resource (110). The memory resource (110) stores therein a program (114) that causes the processor (100) to perform an ID card scanning function. Due to the program (114) being executed, the processor (100) compares dimensions of a first image of an ID card (300) with dimensions of a second image of the ID card (300), and generates a 2-in-1 image obtained by putting the first image and the second image together, on the basis of the dimensions of a larger one of the first image and the second image. The first image is obtained by cropping an image based on first scanning, and the second image is obtained by cropping an image based on second scanning.

## Description

### Field

The present disclosure relates to an image processing apparatus, an image processing method, and an image processing program.

### Background

There is an image processing apparatus, such as a scanner including an image reading function, that includes an ID card scanning function. Examples of the ID card scanning function include a function to crop an image of a scanned ID card to generate an image of only a portion of the ID card, and a function to generate a 2-in-1 image obtained by putting images of front and back sides of the scanned ID card together.

Generally, such an ID card scanning function is assumed to be used for one ID card. On the other hand, some users want to acquire a 2-in-1 image obtained by scanning different kinds of ID cards to obtain images of the ID cards and putting the respective images together.

Note that, in general, a technology is known that is related to cropping performed to accurately cut a portion of a document out of image data obtained by reading front and back sides of the document.

### Summary

An image processing apparatus according to an embodiment of the present disclosure includes at least one processor and at least one memory resource. The memory resource stores therein a program that causes the processor to perform an ID card scanning function. Due to the program being executed, the processor compares dimensions of a first image of an ID card with dimensions of a second image of the ID card, and generates a 2-in-1 image obtained by putting the first image and the second image together, on the basis of the dimensions of a larger one of the first image and the second image. The first image is obtained by cropping an image based on first scanning, and the second image is obtained by cropping an image based on second scanning.

### Brief Description of Figures

Fig. 1 illustrates an example of an internal configuration of an image processing apparatus;
Fig. 2 illustrates an example of an electrical-connection-related configuration of the image processing apparatus;
Fig. 3 illustrates an example of a schematic configuration of a controller;
Fig. 4A illustrates an example of a 2-in-1 image generated by scanning an ID card;
Fig. 4B illustrates an example of a 2-in-1 image generated by scanning the ID card;
Fig. 5A illustrates an example of a 2-in-1 image generated by scanning different ID cards;
Fig. 5B illustrates an example of a 2-in-1 image generated by scanning different ID cards;
Fig. 6A illustrates an example of a 2-in-1 image generated when ID cards having different dimensions are scanned;
Fig. 6B illustrates an example of a 2-in-1 image generated when ID cards having different dimensions are scanned;
Fig. 7 is a flowchart of an example of an image generating process;
Fig. 8A illustrates an example of a 2-in-1 image generated when ID cards having different sizes are placed in states of being long in different directions; and
Fig. 8B illustrates an example of a 2-in-1 image generated when ID cards having different sizes are placed in states of being long in different directions.

### Detailed Description

Existing ID card scanning functions are used on the assumption that images of front and back sides of one ID card are put together. Thus, processing based on the assumption that two images that are put together in a 2-in-1 image have the same dimensions is performed. Specifically, a 2-in-1 image is generated using the first and second scanning images on the basis of dimensions of an image obtained by cropping the first scanning image. Thus, when different kinds of ID cards are scanned to generate a 2-in-1 image and when, for example, dimensions of an ID card scanned for the second time are greater than dimensions of an ID card scanned for the first time, a portion of an image of the ID card scanned for the second time protrudes from the dimensions of the ID card scanned for the first time. This may result in protrusion caused in the 2-in-1 image.

In view of the circumstances described above, the present disclosure makes it possible to generate a 2-in-1 image without image protrusion even when ID cards of different dimensions are scanned for the first time and for the second time by performing an ID card scanning function.

Hereinafter, embodiments of the present disclosure will be described with reference to the drawings.

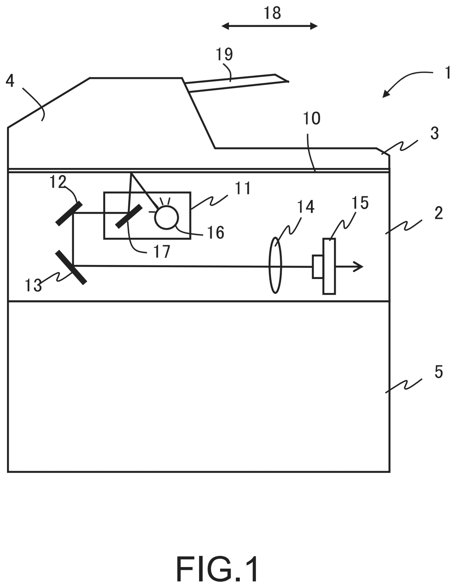

Fig. 1 illustrates an example of an internal configuration of an image processing apparatus 1 according to the present embodiment. The image processing apparatus 1 according to the present embodiment is a multifunctional device that includes, for example, an image reading function, a facsimile function, and an image forming function. Note that the image processing apparatus 1 is not limited to the multifunctional device, and examples of the image processing apparatus 1 may include a scanner apparatus, a printer, and a facsimile apparatus that include image reading functions.

Further, the image processing apparatus 1 of the present embodiment includes a blank-page skip function and an ID card scanning function, and performs processes corresponding to the respective functions. Note that the functions and the processes will be described in detail later.

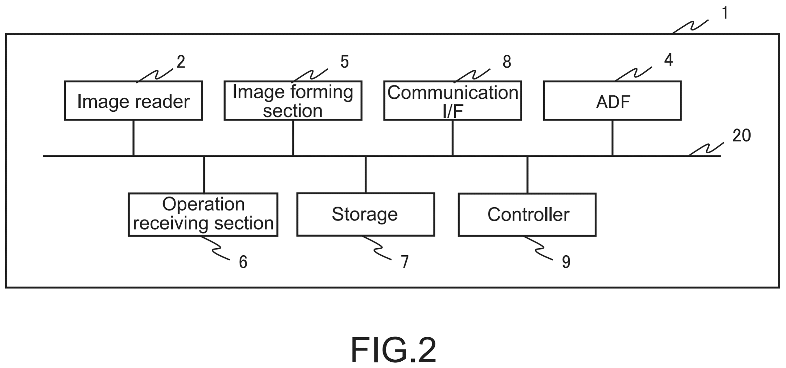

Fig. 2 illustrates an example of an electrical-connection-related configuration of the image processing apparatus 1. A schematic configuration of the image processing apparatus 1 is described with reference to Figs. 1 and 2. As illustrated in these figures, the image processing apparatus 1 includes an image reader 2, a document cover 3, an automatic document feeder (hereinafter referred to as an ADF in some cases) 4, an image forming section 5, an operation receiving section 6 (refer to Fig. 2), a communication interface (I/F) section 8 (refer to Fig. 2), and a controller 9 (refer to Fig. 2).

The image reader 2 performs an image reading process to read a document to obtain image data. As illustrated in Fig. 1, the image reader 2 includes, for example, a contact glass 10, a reading unit 11, a mirror 12, a mirror 13, an optical lens 14, and a charge-coupled device (CCD) 15.

The reading unit 11 includes a light-emitting-diode (LED) light source 16 and a mirror 17, and can be moved in a secondary scanning direction 18 (in a right- and-left direction in Fig. 1) by a movement mechanism (not illustrated) in which a drive motor such as a stepping motor is used. Further, when the reading unit 11 is moved by the drive motor in the secondary scanning direction 18, light irradiated by the LED light source 16 toward the contact glass 10 provided on an upper surface of the image reader 2 is scanned in the secondary scanning direction 18.

When the light is irradiated by the LED light source 16, reflected light reflected off a document or a back surface of the document cover 3 is reflected off the mirror 17 toward the mirror 12. The light reflected off the mirror 17 is guided by the mirrors 12 and 13 to the optical lens 14. The optical lens 14 collects the incident light and causes the incident light to be incident on the CCD 15.

The CCD 15 is a photoelectrically converting element that converts the received light into an electric signal (voltage) corresponding to a light amount (the brightness intensity) of the received light, and that outputs the electric signal to the controller 9. The controller 9 performs image processing on the electric signal received from the CCD 15 to generate image data of the document. Note that an example in which the CCD 15 is used as an imaging device is described in the present embodiment. However, a reading mechanism using a contact image sensor (CIS) having a shorter focal length than the CCD 15 may be applied instead of application of a reading mechanism using the CCD 15.

The document cover 3 is pivotally provided to the image reader 2. The contact glass 10 provided on the upper surface of the image reader 2 is open and closed by the document cover 3 being operated pivotally. A pivoting support of the document cover 3 is provided with an open cover detecting sensor (not illustrated) such as a limit switch. When a user opens the document cover 3 to cause a document to be read to obtain an image of the document, the open cover detecting sensor operates and a detection signal (an open-cover detection signal) for the detection is output to the controller 9.

Here, the image reader 2 reads a document to obtain an image of the document by the following procedure. First, a document is placed on the contact glass 10, and then the document cover 3 is operated to be in a closed position. Thereafter, when the operation receiving section 6 inputs an instruction to perform image reading, the LED light source 16 irradiates pieces of light successively while the reading unit 11 is being moved to the right in the secondary scanning direction 18. Then, reflected light coming from the document or the back surface of the document cover 3 is guided to the CCD 15 through the mirrors 17, 12, and 13 and the optical lens 14, and pieces of light-amount data respectively corresponding to amounts of light received by the CCD 15 are output to the controller 9 successively. When the controller 9 obtains light-amount data for the entirety of a region irradiated with light, the controller 9 performs processing on the obtained light-amount data to generate image data of the document from the light-amount data. The image data is image data making up a rectangular image.

Note that the document cover 3 is provided with the ADF 4. Using a plurality of transportation rollers, the ADF 4 successively transports at least one document set on a document setting portion 19, and moves the document such that the document passes through an auto document reading position to the right in the secondary scanning direction 18, where the auto document reading position is a position determined on the contact glass 10. When the document is moved by the ADF 4, the reading unit 11 is arranged under the auto document reading position, and an image of the document during movement is obtained by the document being read by the reading unit 11 at this position. The document setting portion 19 is provided with a mechanical document detection sensor (not illustrated) that can output a contact signal. When a document is set on the document setting portion 19, the document detection sensor operates and a detection signal (a document detection signal) for the detection is output to the controller 9.

Further, as illustrated in Fig. 1, the image forming section 5 is an electrophotographic image forming device that performs an image forming process (a printing process) on the basis of image data obtained by performing reading by the image reader 2 or on the basis of a printing job input by an information processing apparatus such as an external personal computer through the communication I/F section 8. The image forming section 5 performs the image forming process by a specified procedure with respect to a printing sheet of paper supplied from a sheet cassette (not illustrated), and prints a print target on the printing sheet of paper. Note that it is only required that the image forming process be performed by a known procedure using a known structural element such as a photoconductor drum or a toner container. Thus, a detailed description thereof is omitted.

Further, as illustrated in Fig. 2, the image reader 2, the ADF 4, and the image forming section 5 are connected to the operation receiving section 6, the storage 7, the communication I/F section 8, and the controller 9 through a data bus 20 such that mutual data input and output can be performed.

The communication I/F section 8 is an interface that performs data communication with an external apparatus connected through a communication network such as the Internet or a local area network (LAN). The storage 7 includes, for example, a nonvolatile memory such as a hard disc drive (HDD) or a solid state drive (SSD) .

The operation receiving section 6 includes a display section and an operation section (neither section is illustrated). The display section includes, for example, a color liquid crystal display, and displays thereon various information to a user who is operating the operation receiving section 6. The operation section includes, for example, various push button keys that are arranged adjacently to the display section, and a touchscreen sensor that is arranged on a display screen of the display section, and receives input of an instruction given by a user of the image processing apparatus 1. Further, when an operation is performed on the operation receiving section 6 in order to perform at least one of an image reading operation or an image forming operation, an operation signal for the operation is output from the operation receiving section 6 to the controller 9.

### Schematic Configuration of Controller

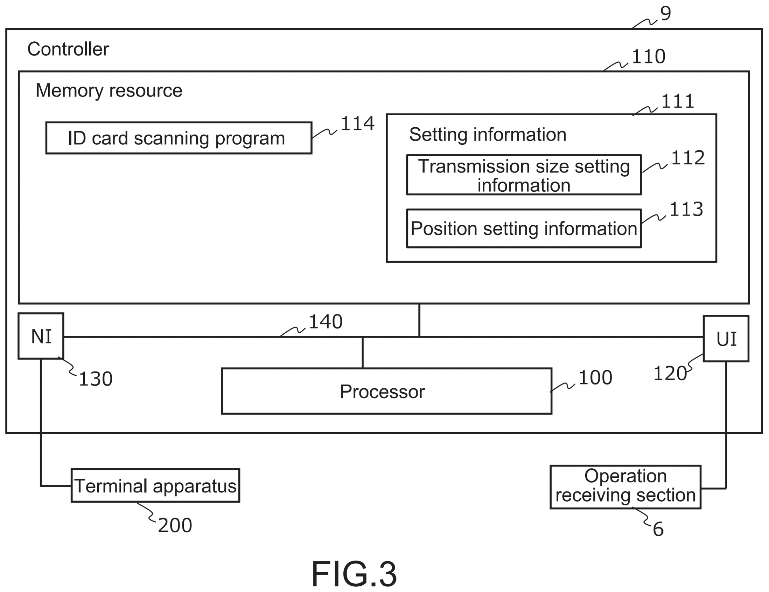

Fig. 3 illustrates an example of a schematic configuration of the controller 9. The controller 9 performs various processes to perform various functions of the image processing apparatus 1. As illustrated in the figure, the controller 9 includes a processor 100, a memory resource 110, a user interface device (UI) 120, and a network interface device (NI) 130, and these devices (or units) are communicably connected to each other through a bus 140.

The processor 100 is a computational apparatus that reads various programs stored in the memory resource 110 to perform processes corresponding to the respective programs. Note that examples of the processor 100 include a microprocessor, a central processing unit (CPU), a field programmable gate array (FPGA), and other semiconductor devices that can perform computation.

The memory resource 110 is a storage apparatus that stores therein various information. Specifically, examples of the memory resource 110 include nonvolatile and volatile storage media such as a random access memory (RAM) and a read only memory (ROM). Note that the memory resource 110 may be, for example, a rewritable storage medium such as a flash memory, a hard disk, or an SSD; a Universal Serial Bus (USB) memory; or a memory card. Further, the memory resource 110 may be a storage medium different from the storage 7 described above, or may be the same storage medium as the storage 7.

The UI 120 is an interface that acquires instruction information provided by a user and output to the controller 9 through the operation receiving section 6. The NI 130 is an interface that acquires the instruction information transmitted to the controller 9 from a terminal apparatus 200 used by the user through a specified communication network such as a LAN or the Internet. Note that the NI 130 may be implemented by the communication I/F section 8 described above, or the controller 9 may include the NI 130 individually.

Further, it is assumed that, in the following description, information communication between the controller 9 and each of the operation receiving section 6 and the terminal apparatus 200 is performed through a corresponding one of the UI 120 and the NI 130, unless otherwise specified. Further, on the basis of a specified program (not illustrated) stored in the memory resource 110, the controller 9 performs a process, such as the image reading process described above, that is to be essentially performed by the image processing apparatus.

### Setting Information 111

As illustrated in Fig. 3, the memory resource 110 includes setting information 111 and an ID card scanning program 114.

The setting information 111 includes transmission size setting information 112 and position setting information 113. The transmission size setting information 112 is setting information regarding dimensions of a document (a document size) when data obtained by scanning is transmitted by email or to, for example, the cloud or a file server. In other words, the "size" used herein does not refer to a data size (a data amount) but to dimensions of a scanned document.

Note that examples of the type of transmission size settable include "same as document size" and standardized sizes including "A3" and "A4." When scanning is performed in a normal mode (scanning in a mode that is not an ID card scanning mode) in a state in which "same as document size" is set to be the transmission size, an image obtained by the scanning is cropped to obtain an image of a portion of a document, and actual-sized image data of the document is generated.

Further, when scanning is performed in the ID card scanning mode in a state in which "same as document size" is set to be the transmission size, images of portions of ID cards are obtained by cropping respective images based on the first scanning and the second scanning, dimensions of the images obtained by the cropping are compared with each other, and a 2-in-1 image is generated on the basis of the dimensions of a larger one of the images. Specifically, two image regions (frames) each having the same dimensions as a larger image of an ID card are provided, and a 2-in-1 image is generated by positioning, in the respective image regions (frames), actual-sized images obtained by cropping performed for the first time and for the second time. In other words, in this case, a 2-in-1 image having dimensions corresponding to substantially twice the size of a larger ID card is generated. Such a process of generating a 2-in-1 image will be described in detail later.

Note that, when the above-described images obtained by the cropping have the same dimensions or when a difference in dimensions between the images is within an error range, the respective actual-sized images obtained by the cropping are positioned in image regions on the basis of the dimensions of one of the image obtained by the cropping correspondingly to the first scanning, and the image obtained by the cropping correspondingly to the second scanning, each of the image regions having substantially the same dimensions as the one of the images. Accordingly, a 2-in-1 image is generated.

Further, when scanning is performed in the normal mode (scanning in a mode that is not the ID card scanning mode) in a state in which a standardized size such as "A4" is set, image data is generated that is obtained by arranging, in a region of the set standardized size, images having the same dimensions as scanned documents or images enlarged or reduced at a specified magnification based on user settings. Further, when scanning is performed in the ID card scanning mode in a state in which the standardized size is set, a 2-in-1 image is generated that is obtained by arranging, in a region of the set standardized size, actual-sized images or images enlarged or reduced at a specified magnification based on the first scanning and the second scanning.

The position setting information 113 is setting information that defines at which position an image obtained by scanning is arranged in an image region. Specifically, examples of the position setting information 113 include "center (middle)", "right/left with upper alignment", and "right/left with lower alignment". Note that such a setting of a position is a setting received for an image of smaller dimensions when ID cards having different dimensions are scanned.

For example, such settings regarding the transmission size setting information 112 and the position setting information 113 can be performed by a user through the terminal apparatus 200 connected through the operation receiving section 6 or the NI 130.

### ID Card Scanning Program 114

The ID card scanning program 114 is a program that causes the processor 100 to perform a process to perform an ID card scanning function. When the processor 100 receives, in response to a user operation, an instruction to perform the ID card scanning function, the processor 100 reads the ID card scanning program 114. In response to this, the controller 9 operates in an ID card scanning mode.

Specifically, the processor 100 having read the ID card scanning program 114 performs scanning twice in total by which front and back sides of an ID card such as a driver's license are assumed to be scanned, and crops images of the scanned ID cards to generate images of only portions of the ID cards. Further, the processor 100 generates a 2-in-1 image obtained by putting the respective images based on the first scanning and the second scanning together in a region having dimensions corresponding to a setting of the transmission size, or in a region of the transmission size.

Note that the ID card scanning function is not limited to generating a 2-in-1 image, and includes other functions such as automatically correcting a shift or inclination of, for example, a read position. Such image processing related to ID card scanning can be performed on the basis of a known approach of table (platen) cropping.

Note that the first scanning and the second scanning may be hereinafter respectively referred to as 1st scanning and 2nd scanning. Further, actual-sized images of ID cards that are respectively obtained by cropping an image based on the first scanning and an image based on the second scanning may be respectively referred to as a 1st image and a 2nd image.

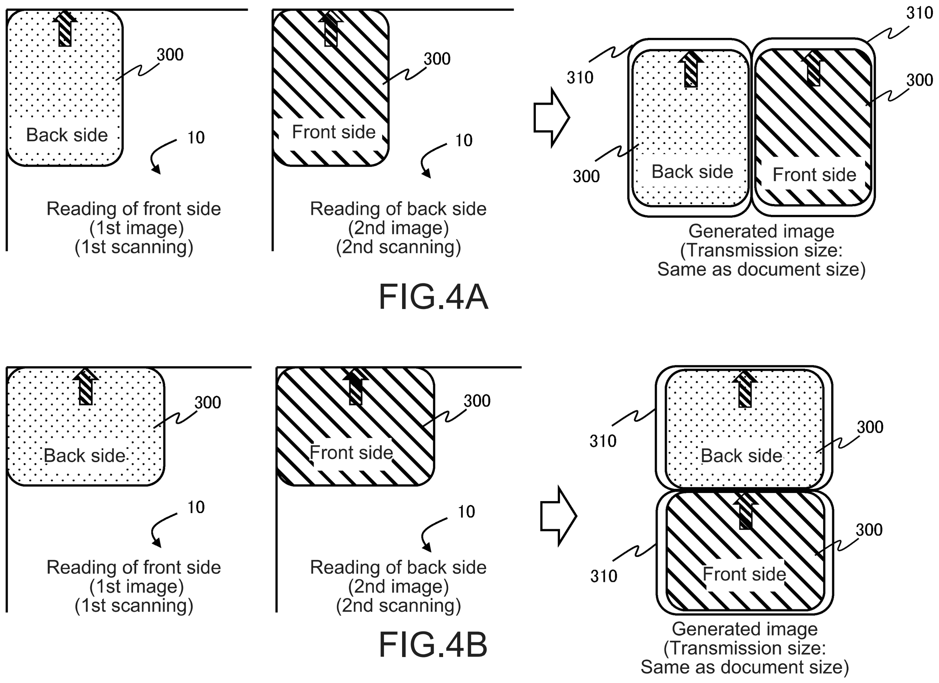

Figs. 4A and 4B illustrate examples of 2-in-1 images each generated by scanning one ID card. Note that the figures each illustrate an example of the ID card scanned when "same as document size" is set in the transmission size setting information 112.

When a reading process (scanning) is performed on two sides of an ID card 300 placed on the contact glass 10, as illustrated in the figures, the controller 9 compares dimensions of a 1st image obtained by cropping with dimensions of a 2nd image obtained by cropping, and determines dimensions of an image region 310. Specifically, the controller 9 determines whether the 1st image and the 2nd image have the same dimensions by comparing lengths of short and long sides of the 1st image with lengths of short and long sides of the 2nd image.

Note that the figures each illustrate an example of using one ID card. Thus, the front and back sides of the ID card have the same dimensions or a difference in dimensions between the sides is within an error range. In this case, the controller 9 generates a 2-in-1 image by positioning the 1st image and the 2nd image in the respective image regions 310 each having dimensions obtained by adding a specified margin to the dimensions of the 1st image (or the 2nd image), that is, to each of the lengths of the short side and the long side of the 1st image (or the 2nd image).

Fig. 4A illustrates a 2-in-1 image having a layout (horizontal arrangement) created when the ID card 300 placed in a longitudinally long state is scanned. Further, Fig. 4B illustrates a 2-in-1 image having a layout (vertical arrangement) created when the ID card 300 placed in a laterally long state is scanned.

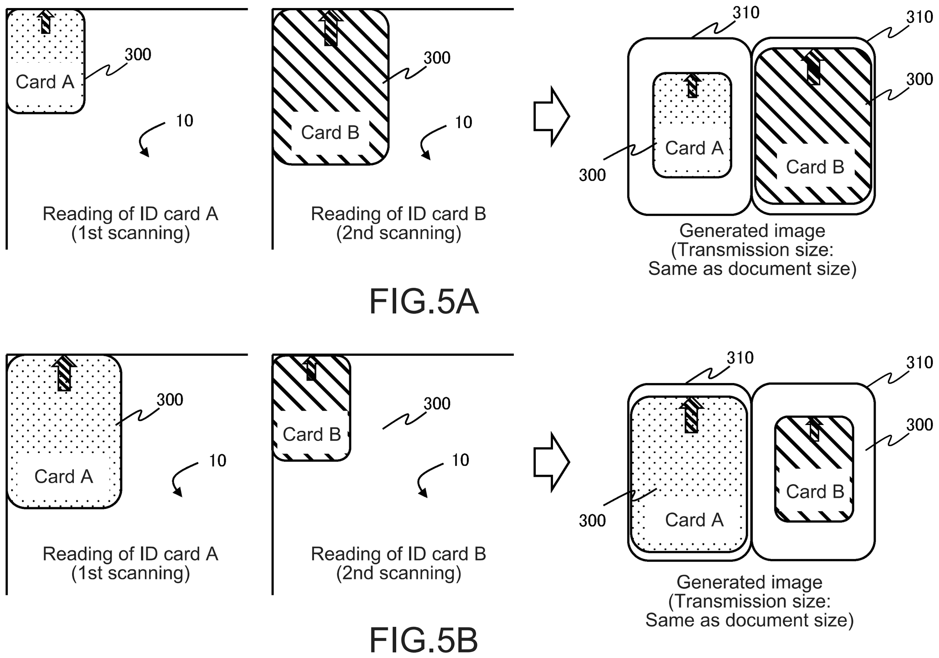

Figs. 5A and 5B illustrate examples of 2-in-1 images each generated by scanning different ID cards 300. As in the case of Figs. 4A and 4B, the figures each illustrate an example of the ID cards scanned when "same as document size" is set in the transmission size setting information 112.

Note that Figs. 5A and 5B illustrate examples in which the ID cards 300 (an ID card A and an ID card B) of different dimensions are respectively scanned by 1st scanning and 2nd scanning. Thus, the controller 9 compares dimensions of a 1st image (the card A) with dimensions of a 2nd image (the card B), and determines that the dimensions of the 1st image are different from the dimensions of the 2nd image.

In this case, the controller 9 generates a 2-in-1 image on the basis of dimensions of a larger one of the images. Specifically, the controller 9 performs adjustment on the basis of the short and long sides of the 1st image and the short and long sides of the 2nd image, such that the 1st image and the 2nd image are placed in a state of being long in the same direction (a longitudinally long state or a laterally long state), and identifies longer long and short sides of the 1st image or the 2nd image. Further, the controller 9 positions the 1st image and the 2nd image in two image regions 310 each having dimensions obtained by adding a length of a specified margin to each of lengths of the identified long and short sides. Accordingly, the controller 9 generates a 2-in-1 image.

Note that Fig. 5A illustrates an example of a 2-in-1 image having a layout (horizontal arrangement) created when the card B has larger dimensions than the card A. Further, Fig. 5B illustrates a 2-in-1 image having a layout (horizontal arrangement) created when the card A has larger dimensions than the card B.

In the case of Fig. 5A, the controller 9 generates a 2-in-1 image obtained by positioning the 1st image and the 2nd image in two image regions 310 based on dimensions of the card B larger than the card A. Further, in the case of Fig. 5B, the controller 9 generates a 2-in-1 image obtained by positioning the 1st image and the 2nd image in two image regions 310 based on dimensions of the card A larger than the card B.

As described above, the controller 9 generates a 2-in-1 image without protrusion of the 1st image or the 2nd image even when the ID cards 300 of different dimensions are scanned.

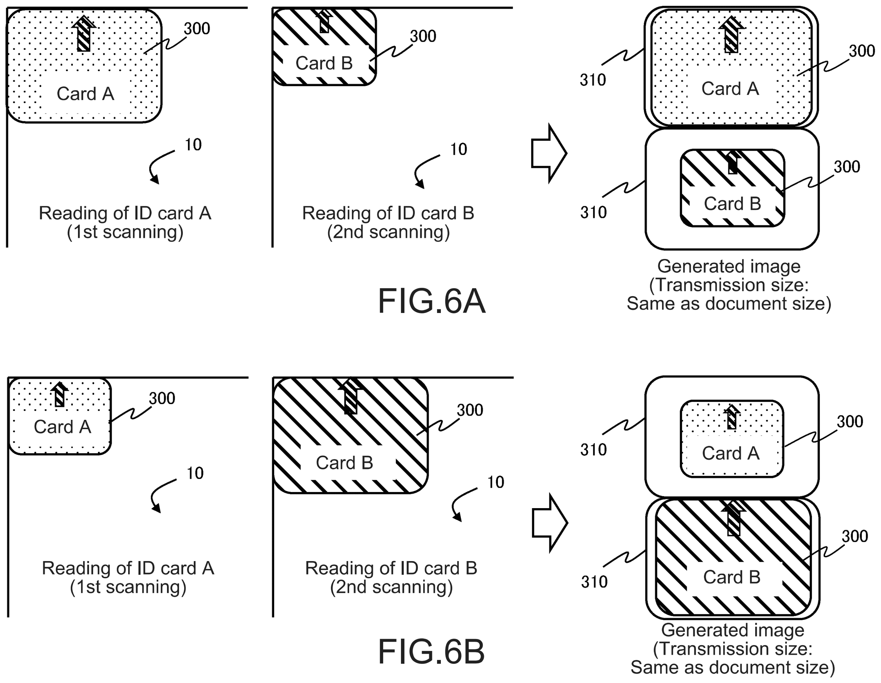

Figs. 6A and 6B illustrate examples of 2-in-1 images each generated when the ID cards 300 having different dimensions are scanned. Note that Fig. 6A illustrates an example of a 2-in-1 image having a layout (vertical arrangement) created when the card A has larger dimensions than the card B. Further, Fig. 6B illustrates a 2-in-1 image having a layout (vertical arrangement) created when the card B has larger dimensions than the card A.

Note that positions of the 1st image and the 2nd image in the respective image regions 310 are determined by the controller 9 referring to the position setting information 113. For example, Figs. 5A, 5B, 6A, and 6B illustrate examples in which "center (middle)" is set in the position setting information 113.

### Image Generating Process

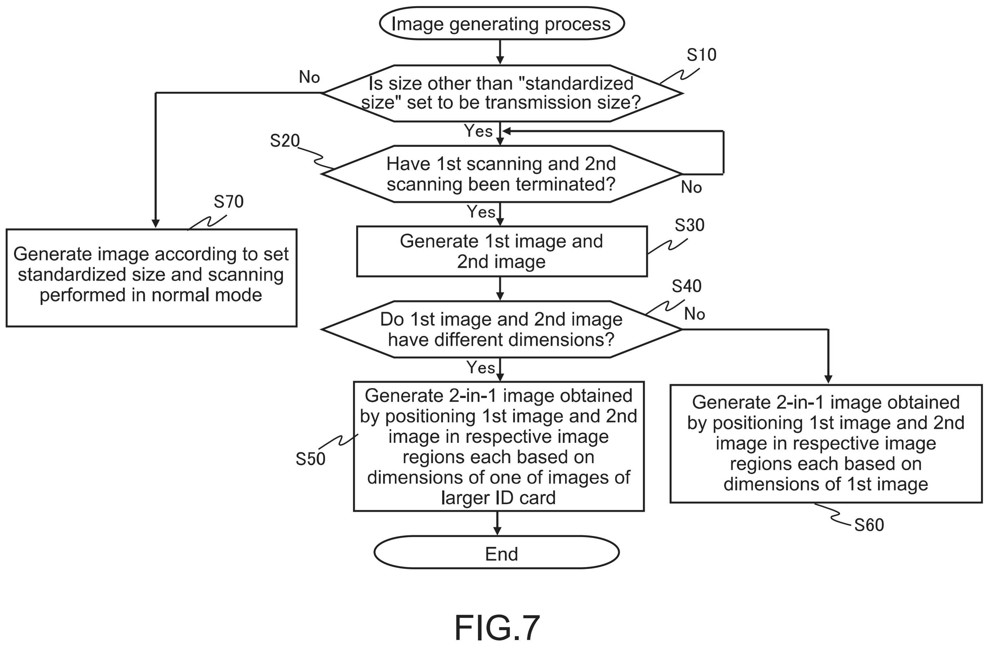

Fig. 7 is a flowchart of an example of an image generating process. For example, the process is started by the controller 9 when an instruction to perform an ID card scanning function is received from a user through the operation receiving section 6 or the NI 130.

When the process is started, the controller 9 determines whether a size other than "standardized size" is set to be a transmission size (Step S10). Specifically, the controller 9 checks to determine the set transmission size by referring to the transmission size setting information 112.

When "standardized size" is set (No in Step S10), the controller 9 moves the process on to Step S70. Note that, in Step S70, the controller 9 generates an image according to the set standardized size and scanning performed in the normal mode.

On the other hand, when the size other than "standardized size", that is, "same as document size" is set (Yes in Step S10), the controller 9 moves the process on to Step S20.

In Step S20, the controller 9 determines whether 1st scanning and 2nd scanning have been terminated. When the controller 9 has determined that the 1st scanning and the 2nd scanning have not been terminated (No in Step S20), the controller 9 repeatedly performs the process of Step S20 until the controller 9 determines that the two scans have been terminated. On the other hand, when the controller 9 has determined that the 1st scanning and the 2nd scanning have been terminated (Yes in Step S20), the controller 9 moves the process on to Step S30.

In Step S30, the controller 9 generates a 1st image and a 2nd image. Specifically, the controller 9 crops an image based on the 1st scanning and an image based on the 2nd scanning to obtain regions of the ID cards. Accordingly, the controller 9 generates the 1st image and the 2nd image.

Next, the controller 9 determines whether the 1st image and the second image have different dimensions (Step S40). Specifically, the controller 9 determines whether the images are different from each other by comparing lengths of short and long sides of the 1st image with lengths of short and long sides of the 2nd image.

When the controller 9 has determined that the images do not have different dimensions (No in Step S40), that is, when the controller 9 has determined that the images have the same dimensions, the controller 9 moves the process on to Step S60. On the other hand, when the controller 9 has determined that the images have different dimensions (Yes in Step S40), the controller 9 moves the process on to Step S50.

In Step S50, the controller 9 generates a 2-in-1 image obtained by positioning the 1st image and the 2nd image in the respective image regions 310 each based on larger dimensions. Specifically, the controller 9 identifies longer long and short sides of the 1st image or the 2nd image, and positions the 1st image and the 2nd image in the image regions 310 each having dimensions obtained by adding a length of a specified margin to each of lengths of the identified long and short sides. Accordingly, the controller 9 generates a 2-in-1 image.

Further, in Step S60, the controller 9 generates a 2-in-1 image obtained by positioning the 1st image and the 2nd image in the respective image regions 310 each based on dimensions of the 1st image or the 2nd image.

Furthermore, the controller 9 terminates the flowchart when performing the process of Step S50 or S60.

The image generating process has been described above.

On the basis of such a process, the 2-in-1 images illustrated in Figs. 5A, 5B, 6A, and 6B are generated. In other words, the image processing apparatus makes it possible to generate a 2-in-1 image without protrusion even when different kinds of ID cards, that is, ID cards of different dimensions are scanned.

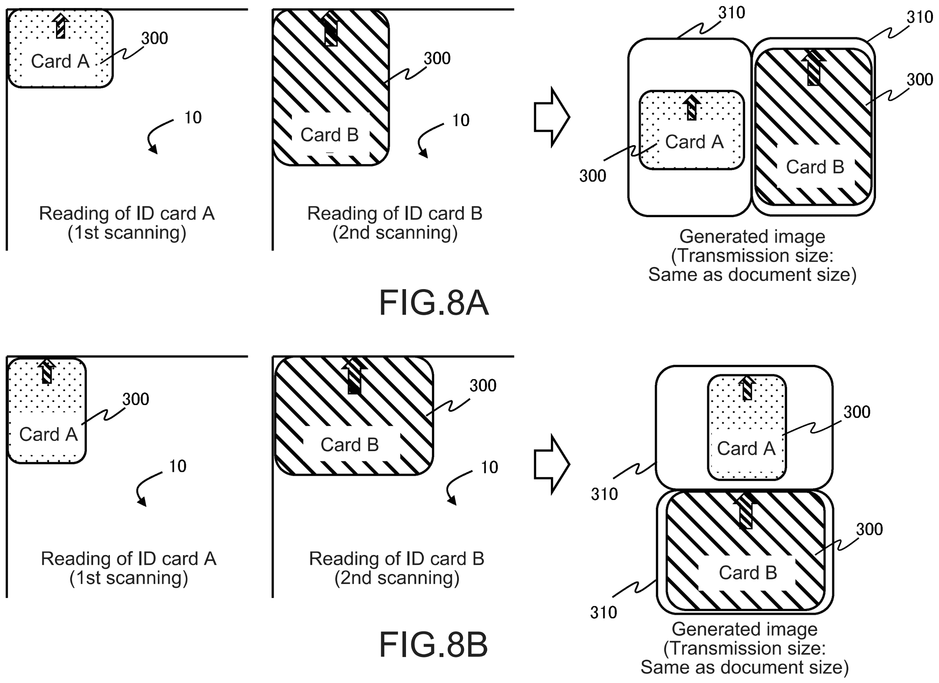

Note that the image processing apparatus 1 also makes it possible to generate a 2-in-1 image without protrusion when ID cards having different sizes and being placed in states of being long in different directions. Processing performed in this case is described with reference to Figs. 8A and 8B.

Figs. 8A and 8B illustrate examples of 2-in-1 images each generated when the ID cards 300 having different sizes are placed in states of being long in different directions. Specifically, Fig. 8A illustrates an example of a 2-in-1 image when a small card A is placed in a laterally long state and a large card B is placed in a longitudinally long state. Further, Fig. 8B illustrates an example of a 2-in-1 image when the small card A is placed in a longitudinally long state and the large card B is placed in a laterally long state.

In such a case, before the process of identifying longer long and short sides of the 1st image or the 2nd image is performed, the controller 9 performs process of adjustment on the basis of the short and long sides of the 1st image and the short and long sides of the 2nd image, such that the 1st image and the 2nd image are placed in a state of being long in the same direction (a longitudinally long state or a laterally long state). This enables the controller 9 to identify sizes of longer long and short sides with respect to the respective long sides of the 1st and 2nd images and the respective short sides of the 1st and 2nd images. Further, the controller 9 sets the image region 310 on the basis of lengths of the longer long and short sides, and positions the 1st image and the 2nd image in the respective regions 310. This enables the controller 9 to generate a 2-in-1 image without protrusion not only when ID cards have different dimensions but also when the ID cards are in states of being long in different directions.

Such an image processing apparatus makes it possible to generate, using the ID card scanning function, a 2-in-1 image without protrusion even when ID cards having different dimensions are respectively scanned by first scanning and second scanning.

Further, the image processing apparatus makes it possible to generate a 2-in-1 image without protrusion even when two kinds of ID cards having different dimensions remain placed in states of being long in different directions.

Furthermore, the image processing apparatus makes it possible to generate a 2-in-1 image without protrusion even when excessively elongated ID cards are scanned, since frames based on lengths of longer long and short sides of the ID card are generated.

Note that the embodiments described above may be provided by an image processing method including performing, by the image processing apparatus 1, image processing such as ID card scanning, an image processing program that causes the controller 9 to perform a process including performing processing procedures included in the image processing, or a computer-readable recording medium that has recorded therein the image processing program.

Although the embodiments of the present disclosure have been described above, of course the present disclosure is not limited to the embodiments described above, and various modifications may be made thereto.

## Claims

1. An image processing apparatus (1), comprising:
at least one processor (100); and
at least one memory resource (110), wherein
the memory resource (110) stores therein a program (114) that causes the processor (100) to perform an ID card scanning function, and
due to the program (114) being executed,
the processor (100)
compares dimensions of a first image of an ID card (300) with dimensions of a second image of the ID card (300), the first image being obtained by cropping an image based on first scanning, the second image being obtained by cropping an image based on second scanning, and
generates a 2-in-1 image obtained by putting the first image and the second image together, on a basis of the dimensions of a larger one of the first image and the second image.

2. The image processing apparatus (1) according to claim 1, wherein
the processor (100)
identifies sizes of longer long and short sides of the first image or the second image, and
generates the 2-in-1 image on a basis of the identified sizes.

3. The image processing apparatus (1) according to claim 1, wherein
the memory resource (110) further includes transmission size setting information (112) regarding a setting of a transmission size of an image obtained by the scanning,
the processor (100) refers to the transmission size setting information (112), and
when same dimensions as the ID card (300) are set to be the transmission size, the processor (100) generates the 2-in-1 image on a basis of the dimensions.

4. The image processing apparatus (1) according to claim 1, wherein
when the first image and the second image have same dimensions or when a difference in dimensions between the first image and the second image is within an error range, the processor (100) generates the 2-in-1 image on a basis of the dimensions of the first image or the second image.

5. The image processing apparatus (1) according to claim 1, wherein
the memory resource (110) further includes position setting information (113) regarding a setting of a position in the 2-in-1 image, and
the processor (100) refers to the position setting information (113) to identify a position of one of the first and second images that has smaller dimensions.

6. The image processing apparatus (1) according to claim 1, wherein
the processor (100)
compares the dimensions of the first image with the dimensions of the second image,
determines an image region (310) having dimensions obtained by adding a margin to the dimensions of a larger one of the first and second images, and
generates the 2-in-1 image by positioning the first image and the second image in the two respective image regions (310).

7. An image processing method that is performed by an image processing apparatus (1) that includes at least one processor (100) and at least one memory resource (110),
the memory resource (110) storing therein a program (114) that causes the processor (100) to perform an ID card scanning function, the image processing method comprising:
due to the program (114) being executed,
comparing, by the processor (100), dimensions of a first image of an ID card (300) with dimensions of a second image of the ID card (300), the first image being obtained by cropping an image based on first scanning, the second image being obtained by cropping an image based on second scanning, and
generating, by the processor (100), a 2-in-1 image obtained by putting the first image and the second image together, on a basis of the dimensions of a larger one of the first image and the second image.

8. An image processing program (114) that causes a computer (9) to perform a process to perform an ID card scanning function, the computer (9) including at least one processor (100) and at least one memory resource (110),
the memory resource (110) storing therein the image processing program (114), the process comprising:
comparing, by the processor (100), dimensions of a first image of an ID card (300) with dimensions of a second image of the ID card (300), the first image being obtained by cropping an image based on first scanning, the second image being obtained by cropping an image based on second scanning, and
generating, by the processor (100), a 2-in-1 image obtained by putting the first image and the second image together, on a basis of the dimensions of a larger one of the first image and the second image.
